(19) Europäisches Patentamt
European Patent Office
Office européen des brevets

(11) **EP 2 631 622 B1**

(12) **EUROPEAN PATENT SPECIFICATION**

(45) Date of publication and mention
of the grant of the patent:
**02.12.2020 Bulletin 2020/49**

(51) Int Cl.:
*G01L 5/00* (2006.01)          *G01N 19/02* (2006.01)
*G01L 11/02* (2006.01)         *G01M 13/02* (2019.01)

(21) Application number: **11834210.4**

(22) Date of filing: **06.10.2011**

(86) International application number:
**PCT/JP2011/073123**

(87) International publication number:
**WO 2012/053370 (26.04.2012 Gazette 2012/17)**

(54) **MEASUREMENT DEVICE, AND MEASUREMENT METHOD**

MESSVORRICHTUNG UND MESSVERFAHREN

DISPOSITIF DE MESURE ET PROCÉDÉ DE MESURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.06.2011   JP 2011123263
19.10.2010   JP 2010234583**

(43) Date of publication of application:
**28.08.2013   Bulletin 2013/35**

(73) Proprietor: **THK Co., Ltd.
Tokyo 141-8503 (JP)**

(72) Inventors:
• **SHODA Kazuo
Tokyo 141-8503 (JP)**
• **YAMANAKA Shuhei
Tokyo 141-8503 (JP)**
• **NOMURA Yuki
Tokyo 141-8503 (JP)**

(74) Representative: **Grünecker Patent- und
Rechtsanwälte
PartG mbB
Leopoldstraße 4
80802 München (DE)**

(56) References cited:
**WO-A1-2010/024190     WO-A1-2010/024190
JP-A- 2 179 442          JP-A- H1 062 273
JP-A- 10 062 273         JP-A- 2009 270 593**

EP 2 631 622 B1

## Description

Technical Field

The present invention relates to a measurement device and a measurement method.

Background Art

When a load applied to a measurement target is measured using an actuator, a measurement instrument such as a load cell is provided between the actuator and the measurement target, and the measurement instrument measures the load (Patent Literature 1).

When sliding resistance of a linear motion guide device is measured, likewise, the sliding resistance is measured using the load cell.

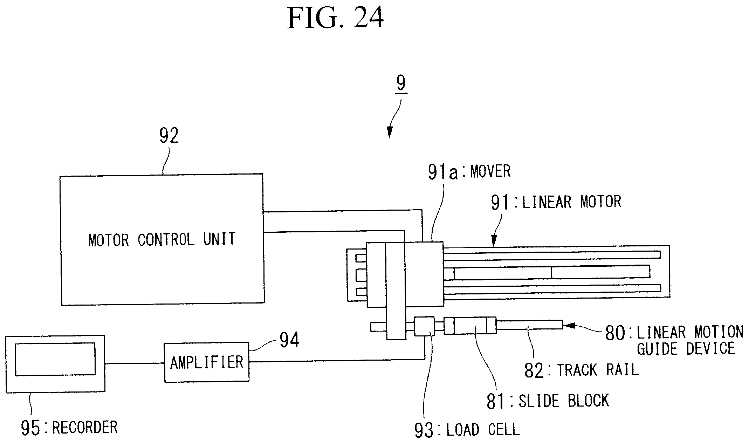

FIG. 24 is a schematic block diagram illustrating a configuration of a measurement device 9. The measurement device 9 measures the sliding resistance which is generated when a slide block 81 of a linear motion guide device 80 is moving on a track rail 82. The measurement device 9 includes a linear motor 91 as an actuator, a motor control unit 92 that controls a linear motor 91, a load cell 93, an amplifier 94, and a recorder 95.

The motor control unit 92 applies a load to the slide block 81 by moving a mover 91a of the linear motor 91 by driving the linear motor 91. The load cell 93 is provided between the mover 91a and the slide block 81. The load cell 93 outputs a signal corresponding to the load which is applied by the mover 91a to the slide block 81.

The amplifier 94 amplifies the signal which is output by the load cell 93, and the signal is stored in the recorder 95. The recorder 95 records the signal which is input from the amplifier 94. The load cell 93 outputs a signal corresponding to the applied load. By calculating the sliding resistance of the linear motion guide device 80 based on the signal which is recorded in the recorder 95, it is possible to measure the sliding resistance.

Citation List

Patent Literature

[Patent Literature 1] Japanese Unexamined Patent Application, First Publication No. H06-124929

Summary of the Invention

Problems to be Solved by the Invention

However, when the load cell and the like are mounted on the mover of the actuator, a problem arises in that the size of the entire device is increased.

An object of the present invention is to provide a measurement device and a measurement method which is able to measure the load applied to the measurement target while they are not provided with the measurement instrument such as the load cell.

A device for measuring a friction between two samples is disclosed in JP-H-10 62273 A. Moreover, WO 2010/024190 A1 discloses a mover which may be moved at different speeds.

Means for Solving the Problems

To solve the aforementioned problems, the present invention provides a measurement device having the features defined in claim 1.

Further preferred embodiments are defined in dependent claims 2 to 5. Moreover, it is provided a method having the features defined in claim 6.

Effects of the Invention

According to the present invention, it is possible to measure the load applied to the measurement target without using the measurement instrument.

Brief Description of the Drawings

FIG. 1 is a schematic block diagram illustrating a configuration of a measurement device 1 according to a present embodiment.
FIG. 2 is a perspective view (a partial cross-sectional view) illustrating a linear motor 11 according to the present embodiment.
FIG. 3 is a perspective view illustrating a coil unit held by a coil holder according to the present embodiment.
FIG. 4 is a diagram illustrating a positional relationship between magnets 103 and coils 104 of the linear motor 10 according to the present embodiment.
FIG. 5 is a perspective view illustrating a principle of a magnetic sensor.
FIG. 6 is a graph illustrating a relationship between a direction of a magnetic field and a resistance value in an AMR sensor.
FIG. 7 is a diagram illustrating an example of a shape of a ferromagnetic thin-film metal of a magnetic sensor 112 which detects the direction of the magnetic field even when the magnetic field intensity is greater than or equal to the saturated sensitivity.
FIG. 8 is a diagram illustrating an equivalent circuit (half bridge) of the magnetic sensor shown in FIG. 7.
FIG. 9A is a diagram illustrating an example of a shape of a ferromagnetic thin-film metal of a magnetic sensor which detects the direction of the magnetic field.
FIG. 9B is a diagram illustrating an equivalent circuit (half bridge) of the magnetic sensor shown in FIG. 9A.
FIG. 10 is a diagram illustrating a positional relationship between a rod 101 and the magnetic sensor 112.

FIG. 11 is a diagram illustrating an example of a signal which is output by the magnetic sensor 112.

FIG. 12A is a diagram illustrating an example of a shape of a ferromagnetic thin-film metal of a magnetic sensor using two full-bridge configurations.

FIG. 12B is a diagram illustrating an equivalent circuit (half bridge) of the magnetic sensor shown in FIG. 12A.

FIG. 13 is a graph illustrating signals which are output by the magnetic sensor shown in FIGS. 12A and 12B.

FIG. 14 is a conceptual diagram illustrating the signal which is output by the magnetic sensor 112, and a positional relationship between the rod 101 and the magnetic sensor 112.

FIG. 15 is a diagram illustrating a Lissajous figure formed by a cosine wave signal and a sine wave signal which are output by the magnetic sensor 112.

FIG. 16 is a diagram illustrating the magnetic sensor 112 which is mounted on an end case 109.

FIG. 17 is a diagram illustrating a bush 108 (a bearing) which is mounted on the end case 109.

FIG. 18 is a schematic block diagram illustrating a configuration of a motor control unit 20 according to the present embodiment.

FIG. 19 is a schematic diagram illustrating an operation which is performed by the linear motor 10 according to the present embodiment when sliding resistance of a linear motion guide device 80 is measured.

FIG. 20 is a flowchart illustrating a first control procedure of the motor control unit 20 according to the present embodiment.

FIG. 21 is a graph illustrating a relationship between a speed, a current, and a position which are drawn until an operation completion signal is turned on after the rod 101 begins to be moved from an origin in the present embodiment.

FIG. 22 is a graph illustrating a relationship between the speed, the current, and the position which are drawn until the rod 101 is returned to the origin after the operation completion signal is turned on in the present embodiment.

FIG. 23 is a flowchart illustrating a second control procedure of the motor control unit 20 according to the present embodiment.

FIG. 24 is a schematic block diagram illustrating a configuration of a measurement device 9 that measures sliding resistance which is generated when a slide block 81 of a linear motion guide device 80 is moved on a track rail 82.

Embodiments of the Invention

Hereinafter, with reference to the drawings, a measurement device and a measurement method according to an embodiment of the present invention is described.

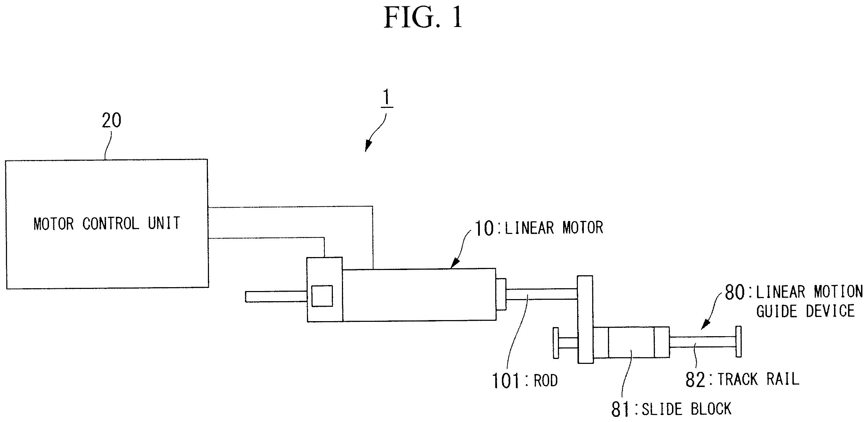

FIG. 1 is a schematic block diagram illustrating a configuration of a measurement device 1 according to the present embodiment. The measurement device 1 includes a rod-type linear motor 10 and a motor control unit 20 that controls the linear motor 10.

A description is given of an exemplary case where the measurement device 1 measures sliding resistance which is generated when a slide block 81 of a linear motion guide device 80 is moved on a track rail 82. The measurement device 1 applies a load to the slide block 81 of the linear motion guide device 80 (a measurement target) by bringing one end of a rod 101 (a mover) of the linear motor 10 into contact with the slide block 81, and thereby measures the sliding resistance of the linear motion guide device 80.

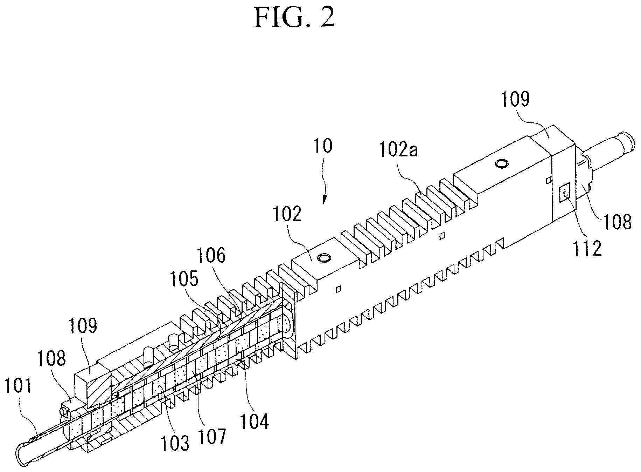

FIG. 2 is a perspective view (a partial cross-sectional view) illustrating the linear motor 10 according to the present embodiment. The linear motor 10 is a rod-type linear motor in which the rod 101 is moved in a direction of an axis thereof relative to a coil housing case 102.

A plurality of coils 104 are layered (arranged) inside the coil housing case 102. End cases 109 are mounted on both end faces of the coil housing case 102, respectively. A bush 108 (a bearing) for guiding the linear motion of the rod 101 is mounted on each end case 109.

Either one of the two end cases 109 is provided with a magnetic sensor 112 that detects magnetic field generated from the rod 101.

The rod 101 is made of, for example, a non-magnetic material such as stainless steel. The rod 101 has a hollow space like a pipe. In the hollow space of the rod 101, a plurality of magnets 103 (segment magnets), each having a cylindrical shape, are layered such that the same poles thereof face each other. The magnets are layered such that the N pole faces the N pole and the S pole faces the S pole. Pole shoes 107 (magnetic pole blocks) made of a magnetic material such as iron are interposed between the magnets 103. The rod 101 penetrates the inside of the layered coils 104. The rod 101 is supported to the coil housing case 102 so as to be capable of being moved in the direction of the axis.

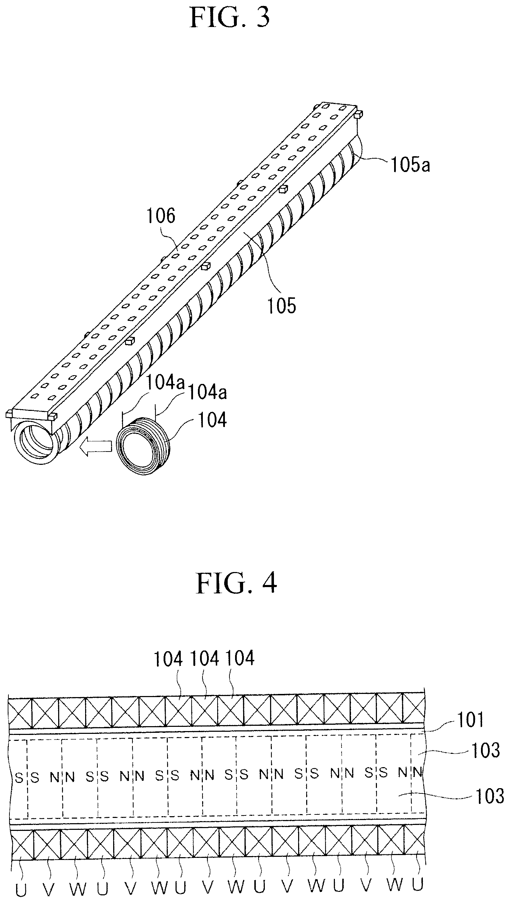

FIG. 3 is a perspective view illustrating a coil unit held by a coil holder 105 according to the present embodiment. Each coil 104 is a spiral winding of a copper wire, and is held by the coil holder 105. The plurality of coils 104 are windings of copper wires which are wound around an outer circumference of the rod 101 centering on an array direction of the magnets 103 of the rod 101. The respective coils 104 are arranged in a direction the same as the array direction of the magnets 103.

Ring-shaped spacers 105a made of resin are interposed between the coils 104, thereby insulating the adjacent coils 104. A printed-circuit board 106 is provided on the coil holder 105. The end portions 104a of the winding wire of the coil 104 are connected to the printed-circuit board 106 through wires.

The coil housing case 102 is molded integrally with the coils 104 through the insert molding in which the coils 104 and the coil holder 105 are set in a mold and melted resin or special ceramics are injected into the mold. A plurality of fins 102a are formed on the coil housing case 102 in order to increase the heat radiation performance of the coils 104.

The coils 104, which are held by the coil holder 105, may be housed in the coil housing case 102 made of aluminum, and the gap between the coils 104 and the coil housing case 102 may be filled with an adhesive. Thereby, the coils 104 and coil holder 105 may be fixed in the coil housing case 102.

FIG. 4 is a diagram illustrating a positional relationship between the magnets 103 and the coils 104 of the linear motor 10 according to the present embodiment.

In the hollow space of the rod 101, the plurality of disk-shaped magnets 103 (segment magnets) are arranged such that the same poles thereof face each other. The three coils 104 constitute one three-phase coil formed of U, V, and W phases. The combination of the plurality of three-phase coils constitutes a coil unit. When three-phase currents having three phases, each of which is different from the others by 120°, are flowed in the plurality of coils 104 divided into three phases of U, V, and W phases, the shifting magnetic field which shifts in a direction of an axis of the coils 104 is generated. The rod 101 is linearly moved relative to the coils 104 in synchronization with a speed of the shifting magnetic field by thrust which is generated by the shifting magnetic field.

As shown in FIG. 2, the end cases 109 are magnetic sensor housing cases. The magnetic sensor 112 for detecting a position of the rod 101 is mounted on one of the end cases 109. The magnetic sensor 112 is disposed to be separated from the rod 101 with a predetermined space interposed therebetween. The magnetic sensor 112 detects the change in a direction of the magnetic field (a direction of a magnetic vector) of the rod 101 generated by the linear motion of the rod 101.

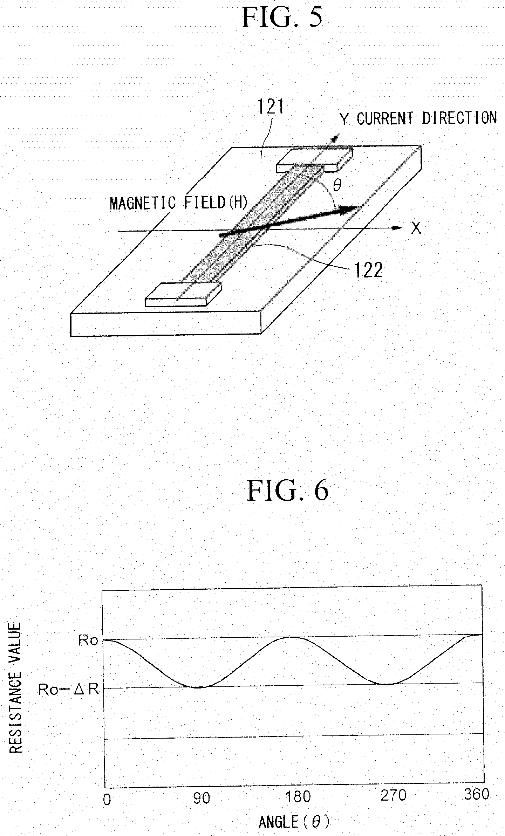

As shown in FIG. 5, the magnetic sensor 112 has a Si or glass substrate 121 and a magnetoresistive element 122 that is formed on the substrate 121 and is made of a ferromagnetic thin-film metal of an alloy having a ferromagnetic metal such as Ni and Fe as main components. The magnetic sensor 112 is called an AMR (Anisotropic-Magneto-Resistance) sensor (anisotropic-magneto-resistance element) since the resistance value of the magnetic sensor 112 is changed depending on a specific magnetic field direction (cited reference: "Vertical-Type MR Sensor Technology Data", [online], October 1, 2005, KOHDEN Co., Ltd., "retrieval on August 25, 2010", the Internet<URL; http: //www.hkd.co.jp/technique/img/amr-notel.pdf>).

FIG. 6 is a graph illustrating a relationship between a direction of a magnetic field and a resistance value in the AMR sensor.

A current is applied to the magnetoresistive element 122, a magnetic field intensity at which the amount of change in resistance is saturated is applied to the magnetoresistive element 122, and an angle θ between a direction of the magnetic field (H) and the current direction Y is varied. At this time, as shown in FIG. 6, the amount of change in resistance (ΔR) is maximized when the current direction is perpendicular to the direction of the magnetic field (θ = 90°, 270°), and is minimized when the current direction is parallel to the direction of the magnetic field (θ = 0°, 180°).

A resistance value R is changed depending on a component of the angle between the current direction and the magnetic field direction as represented by the following equation (1).

When the magnetic field intensity is greater than or equal to the saturated sensitivity, ΔR is a constant, and the resistance value R is not affected by the magnetic field intensity.

$$R = R0 - \Delta R \sin 2\theta : \quad (1)$$

R0: the resistance value of the ferromagnetic thin-film metal in the absence of the magnetic field
ΔR: the amount of change in resistance
θ: the angle which indicates the magnetic field direction

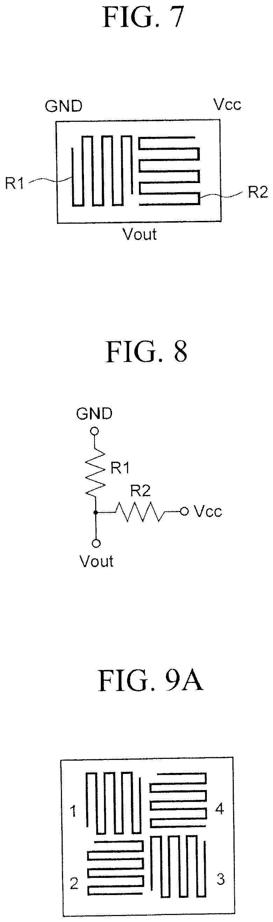

FIG. 7 is a diagram illustrating an example of a shape of the ferromagnetic thin-film metal of the magnetic sensor 112 which detects the direction of the magnetic field even when the magnetic field intensity is greater than or equal to the saturated sensitivity.

A ferromagnetic thin-film metal element (R1) formed in a longitudinal direction and an element (R2) formed in a lateral direction are connected through wires in series.

The magnetic field in a vertical direction which causes the most change in resistance of the element (R1) causes the least change in resistance of the element (R2). The resistance values R1 and R2 are given by the following equations (2) and (3).

$$R1 = R0 - \Delta R \sin 2\theta : \quad (2)$$

$$R2 = R0 - \Delta R \cos 2\theta : \quad (3)$$

FIG. 8 is a diagram illustrating an equivalent circuit (half bridge) of the magnetic sensor. The output Vout of the equivalent circuit is given by the following equation (4).

$$Vout = R1 \cdot Vcc/(R1+R2) : \quad (4)$$

Substituting equations (2) and (3) into equation (4), as a result, the following equations (5-1) and (5-2) can be obtained.

$$Vout = Vcc/2 + \alpha cos2\theta : \quad (5\text{-}1)$$

$$\alpha = \Delta R \cdot Vcc/2(2R0 - \Delta R) : \quad (5\text{-}2)$$

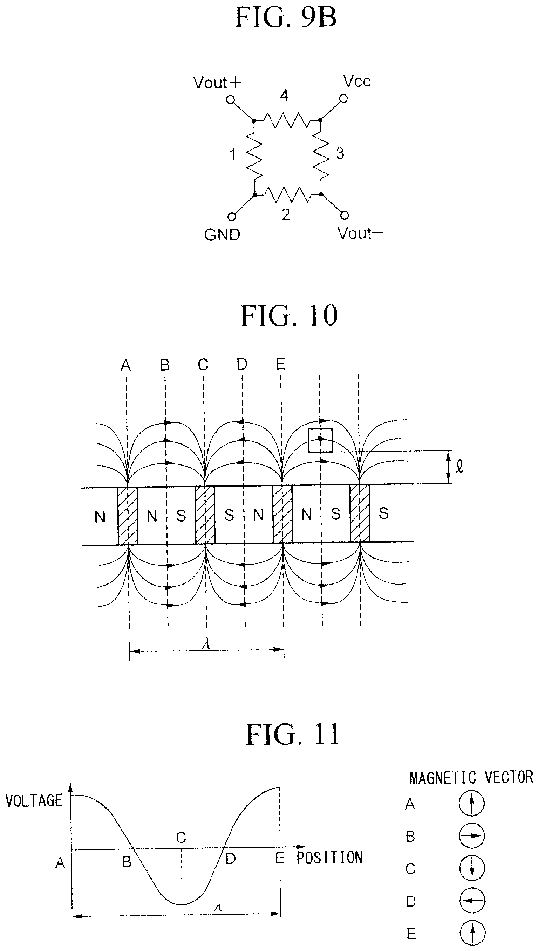

FIG. 9 is a diagram illustrating an example of a shape of the ferromagnetic thin-film metal of the magnetic sensor which detects the direction of the magnetic field.

When the shape of the ferromagnetic thin-film metal is formed, it is possible to perform amplification and improvement of stability of the midpoint potential by using two outputs Vout+ and Vout-.

A description is given of the output of the magnetic sensor 112 and of the change in the magnetic field direction in a case where the rod 101 is linearly moved.

FIG. 10 is a diagram illustrating a positional relationship between the rod 101 and the magnetic sensor 112.

The magnetic sensor 112 is disposed at the position of the gap 1, to which the magnetic field intensity greater than or equal to the saturated sensitivity is applied, such that the change in the direction of the magnetic field affects the sensor surface. At this time, when the magnetic sensor 112 is moved by a distance λ from a position A to a position E along the rod 101, the output of the magnetic sensor 112 is as follows.

FIG. 11 is a diagram illustrating an example of a signal which is output by the magnetic sensor 112.

When the rod 101 is linearly moved by the distance λ, the direction of the magnetic field rotates one revolution on the sensor surface. The voltage signal at that time is a signal of one-period sine wave. More specifically, the voltage Vout, which is represented by equation (5-1), is a signal of a two-period sine wave. However, when a bias magnetic field is applied at an angle of 45° to an extension direction of the element of the magnetic sensor 112, the period is halved. Thereby, it is possible to obtain one-period output waveform in the case where the rod 101 is linearly moved by λ.

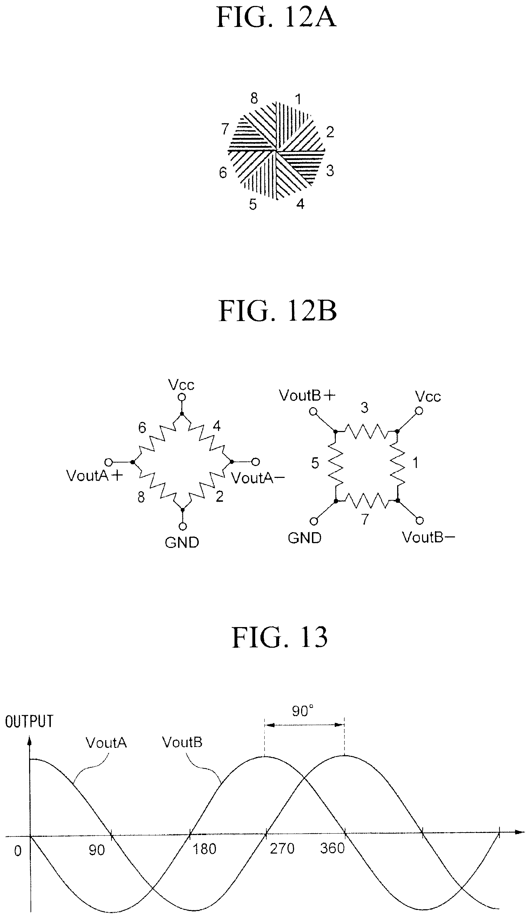

As shown in FIG. 12A, in order to detect the direction of the motion, two elements having a full-bridge configuration are formed on a single substrate at an angle of 45° to one another.

As shown in FIG. 13, the outputs VoutA and VoutB obtained by two of the full-bridge circuits are a cosine wave signal and a sine wave signal having a phase difference of 90° from each other.

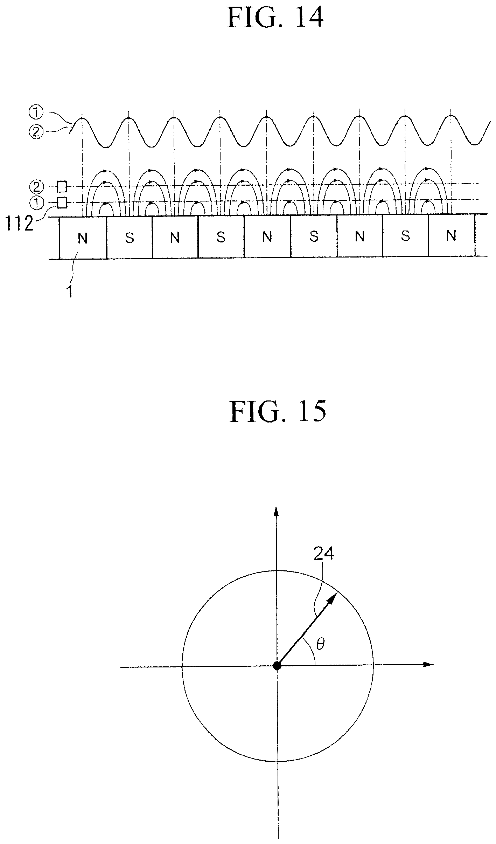

As shown in FIG. 12B, in the magnetic sensor 112, two elements having a full-bridge configuration are formed on the single substrate at an angle of 45° to one another. The magnetic sensor 112 detects the change of the direction of the magnetic field of the rod 101. Hence, as shown in FIG. 14, even if the mounting position of the magnetic sensor 112 is shifted from (1) to (2), there is a small difference in the sine wave signal and the cosine wave signal (the outputs VoutA and VoutB) which are output by the magnetic sensor 112.

FIG. 15 is a diagram illustrating a Lissajous figure formed by the outputs VoutA and VoutB which are output by the magnetic sensor 112.

Since there is a small change in the output of the magnetic sensor 112, it is difficult to change the size of the circle shown in FIG. 15. Therefore, it is possible to precisely detect the direction θ of a magnetic vector 24. Even though the gap 1 between the rod 101 and the magnetic sensor 112 is not controlled with high accuracy, it is possible to detect the exact position of the rod 101.

Accordingly, it becomes easy to control mounting of the magnetic sensor 112. Further, the backlash of the mounting of the rod 101 guided by the bush 108 may be allowed. Furthermore, the rod 101 may be allowed to be slightly curved.

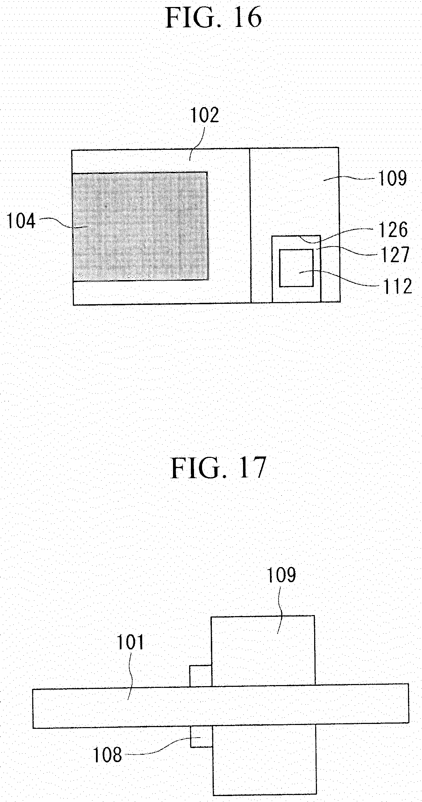

FIG. 16 is a diagram illustrating the magnetic sensor 112 which is mounted on the end case 109. A space (a magnetic sensor housing portion 126) for housing the magnetic sensor 112 is provided in the end case 109.

After the magnetic sensor 112 is disposed in the magnetic sensor housing portion 126, the periphery of the magnetic sensor 112 is filled with a filler 127. Thereby, the magnetic sensor 112 is fixed to the end case 109. Since the magnetic sensor 112 has temperature characteristics, the output thereof is changed depending on a change in temperature. In order to reduce an effect of heat generated by the coils 104, the end case 109 and the filler 127 employ a material having the thermal conductivity which is lower than that of the coil housing case 102. For example, the coil housing case 102 employs epoxy-type resin. The end case 109 and the filler 127 employ polyphenylene sulfide (PPS).

FIG. 17 is a diagram illustrating a bush 108 (a bearing) which is mounted on the end case 109. By making the end case 109 have a bearing function, it is possible to prevent the gap between the rod 101 and the magnetic sensor 112 from fluctuating.

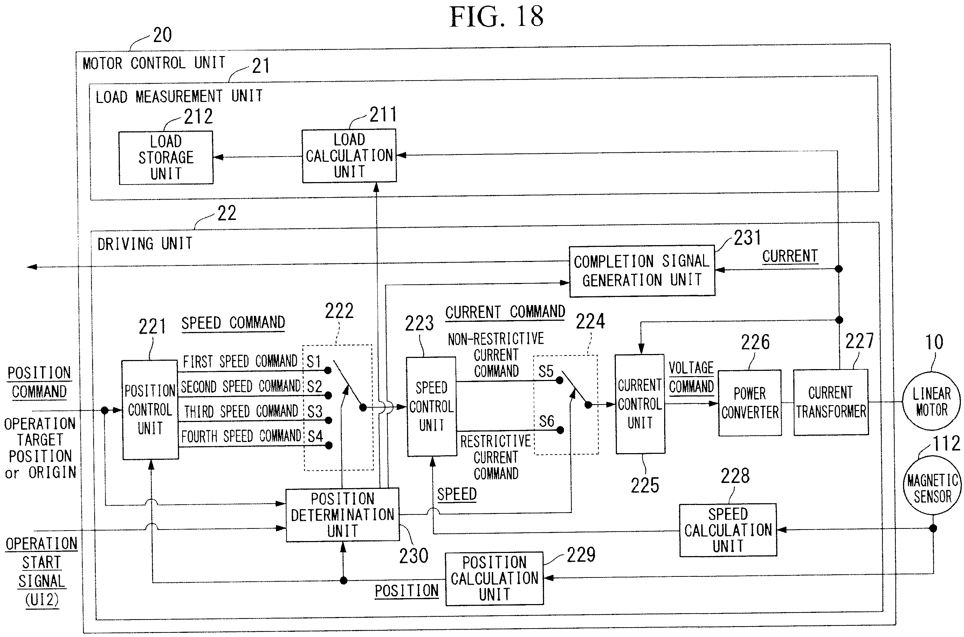

FIG. 18 is a schematic block diagram illustrating the configuration of the motor control unit 20 according to the present embodiment.

The motor control unit 20 includes a load measurement unit 21 and a driving unit 22.

The load measurement unit 21 has a load calculation unit 211 that calculates a load value to be applied by the linear motor 10 to the slide block 81 (the measurement target) through the rod 101 by multiplying a current value of the current flowing in the linear motor 10 by a thrust constant of the linear motor 10, and a load storage unit 212 that stores the load value which is calculated by the load calculation unit 211.

The driving unit 22 has a position control unit 221, a switching unit 222, a speed control unit 223, a switching unit 224, a current control unit 225, a power converter 226, a current transformer (Current Transformer; CT) 227, a speed calculation unit 228, a position calculation unit 229, and a position determination unit 230.

The position control unit 221 calculates a speed command based on a position command input from the outside and position information of the rod 101 calculated by the position calculation unit 229. The position control unit 221 stores first to fourth speeds (FL1SPD to FL4SPD) in advance, and thus outputs four speed commands based on the first to fourth speeds (first to fourth speed commands).

The first speed command is a command indicating a movement speed at which the rod 101 is moved from a predetermined origin until one of both ends of the rod 101 closer to the measurement target reaches the vicinity (a position FL2POS) of the slide block 81 of the linear motion guide device 80. At this time, the upper limit value (the first speed (FL1SPD)) of the speed at which the rod 101 is moved is determined in advance.

The second speed command is a command indicating a movement speed at which the rod 101 comes into contact with the measurement target so as to apply a load to the measurement target. At this time, the speed (the second speed (FL2SPD)) at which the rod 101 is moved is determined in advance.

The second speed (FL2SPD) is a speed lower than the first speed (FL1SPD). The second speed (FL2SPD) is set to be lower than a speed at which undesired impact does not occur when the rod 101 comes into contact with the slide block 81.

The vicinity (the position FL2POS) of the slide block 81 (the measurement target) is a position at which the movement speed of the rod 101 begins to be reduced to the second speed when one end of the rod 101 comes into contact with the slide block 81.

The position FL2POS is a position which is determined in advance based on the contact position of the slide block 81, the first speed command (FL1SPD), the second speed command (FL2SPD), and characteristics of the linear motor 10.

The third speed command is a command indicating a movement speed at which the rod 101 is moved toward the origin after applying the load to the slide block 81. At this time, the speed (the third speed (FL3SPD)) at which the rod 101 is moved is determined in advance.

The fourth speed command is a command indicating a movement speed after the rod 101 reaches a predetermined speed change position (FL3POS) when moved toward the origin after applying the load to the measurement target. At this time, the upper limit value (the fourth speed (FL4SPD)) of the speed at which the rod 101 is moved is determined in advance.

The fourth speed (FL4SPD) is set to a speed higher than the third speed (FL3SPD).

The switching unit 222 selects any one of the four speed commands which are output by the position control unit 221, based on the control of the position determination unit 230.

The speed control unit 223 receives inputs of the speed command selected by the switching unit 222 and speed information which indicates the speed of the rod 101 calculated by the speed calculation unit 228. The speed control unit 223 calculates a current value by which the movement speed of the rod 101 is set to the speed of the speed command, based on deviation between the speed indicated by the speed command and the speed indicated by the speed information.

The speed control unit 223 outputs the calculated current value (a non-restrictive current command). The speed control unit 223 outputs a current command (a restrictive current command) to set a predetermined current limit value (FL2I) to an upper limit value.

When the calculated current value is less than or equal to the current limit value (FL2I), the non-restrictive current command and the restrictive current command indicates the same current value. In contrast, when the calculated current value is greater than the current limit value (FL2I), the non-restrictive current command indicates the calculated current value, and the restrictive current command indicates the current limit value (FL2I).

The switching unit 224 selects either one of the restrictive current command and the non-restrictive current command which are output by the speed control unit 223, based on the control of the position determination unit 230. The current control unit 225 calculates a voltage command based on the current command selected by the switching unit 224 and a current value of the current which flows in the linear motor 10 and is measured by the current transformer 227.

The power converter 226 supplies a voltage corresponding to the voltage command calculated by the current control unit 225 to the linear motor 10. The current transformer 227 is mounted on a power line which connects the power converter 226 and the linear motor 10. The current transformer 227 measures the current value which flows in the power line. The current transformer 227 outputs the measured current value to the load calculation unit 211 of the load measurement unit 21, the current control unit 225, and a completion signal generation unit 231.

The speed calculation unit 228 calculates the movement speed of the rod 101, based on the amounts of changes in the sine wave signal and the cosine wave signal (the outputs VoutA and VoutB) which are output from the magnetic sensor 112 of the linear motor 10.

The position calculation unit 229 calculates the amount of movement of the rod 101 from the origin, based on the amounts of changes in the sine wave signal and the cosine wave signal (the outputs VoutA and VoutB) which are output from the magnetic sensor 112, and outputs the position information which indicates the position of the rod 101.

The position determination unit 230 performs control to cause the switching unit 222 to select any one of the four speed commands output by the position control unit 221, based on the position command and an operation start signal which are input from the outside, and the position information which indicates the position of the rod 101 and is output by the position calculation unit 229.

The position determination unit 230 performs control to cause the switching unit 224 to select either one of the two current commands output by the speed control unit 223, based on the position command, the operation start signal, and the position information.

The completion signal generation unit 231 outputs an operation completion signal (UO2) to the outside if the current value measured by the current transformer 227 reaches the predetermined current limit value (FL2I) when the linear motor 10 applies the load to the slide block 81.

Next, a description is given of the operation which is performed by the linear motor 10 when the sliding resistance of the linear motion guide device 80 is measured. A description is given of a case of measuring the sliding resistance deviation by measuring the sliding resistance throughout all the range of movement of the linear motion guide device 80.

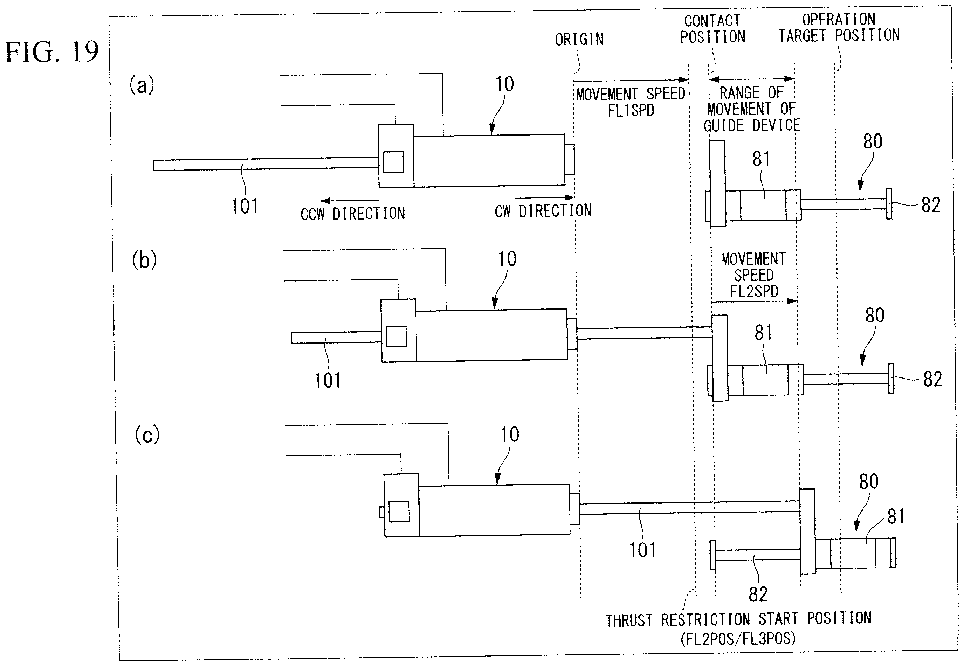

FIG. 19 is a schematic diagram illustrating an operation which is performed by the linear motor 10 when the sliding resistance of the linear motion guide device 80 is measured. The drawing shows states (a) to (c).

A direction in which the rod 101 approaches the slide block 81 is referred to as a CW direction (a rightward direction in FIG. 19). A direction in which the rod 101 is separated from the slide block 81 is referred to as a CCW direction (a leftward direction in FIG. 19).

As shown in the state (a) of FIG. 19, when the measurement is started, the position of one end of the rod 101 close to the linear motion guide device 80 is at the origin.

When an operation start signal is input, the measurement operation is started. The rod 101 begins to be moved from the origin toward the operation target position (in the CW direction) in response to the first speed command. When one end of the rod 101 reaches the vicinity of the slide block 81, the rod 101 is decelerated to the speed of the second speed command.

As shown in the state (b) of FIG. 19, the rod 101 moves the slide block 81 at the second speed (FL2SPD) while applying the load to the slide block 81.

Thereafter, as shown in the state (c) of FIG. 19, the slide block 81 of the linear motion guide device 80 reaches the end of the range of movement, and then the rod 101 is not moved. When the current value of the current flowing in the linear motor 10 reaches the current limit value (FL2I), the operation completion signal is output from the motor control unit 20.

In a series of the above-mentioned operations, the load calculation unit 211 calculates the lead value based on the current value, and stores the calculated load value in the load storage unit 212.

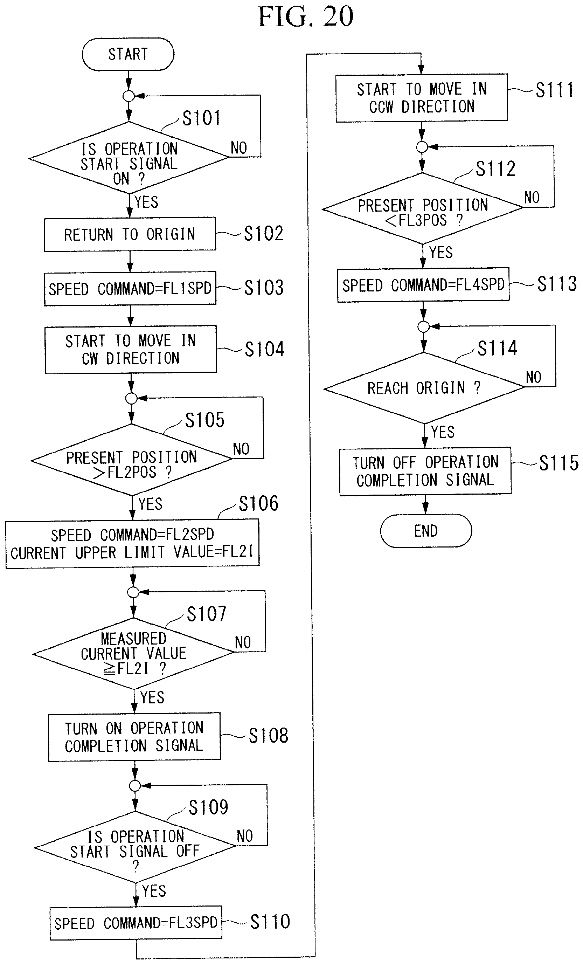

FIG. 20 is a flowchart illustrating a control procedure of the motor control unit 20 according to the present embodiment.

When the control of the motor control unit 20 is started, the position determination unit 230 determines whether or not the operation start signal (UI2) is turned on (step S101). The position determination unit 230 is on standby until the operation start signal is turned on (step S101: NO).

In the step S101, if the operation start signal is turned on (step S101: YES), the position determination unit 230 causes the switching unit 222 to select the third speed command or the fourth speed command, and causes the linear motor 10 to perform the operation for returning to the origin (step S102).

Subsequently, the position control unit 221 calculates the first speed command in response to the position command indicating an operation target position. The position determination unit 230 causes the switching unit 222 to select the first speed command. The position determination unit 230 causes the switching unit 224 to select the non-restrictive current command (step S103). The position determination unit 230 begins to move the rod 101 of the linear motor 10 toward the slide block 81 of the linear motion guide device 80 (in the CW direction) (step S104).

The position determination unit 230 determines whether or not the rod 101 reaches the position FL2POS (step S105). The position determination unit 230 drives the linear motor 10 in response to the first speed command until the rod 101 reaches the position FL2POS (step S105: NO).

In the step S105, if the rod 101 reaches the position FL2POS (step S105: YES), the position determination unit 230 causes the switching unit 222 to select the second speed command. The position determination unit 230 causes the switching unit 224 to select the restrictive current command (step S106). At this time, the position determination unit 230 outputs a signal indicating that the rod 101 reaches the position FL2POS to the load calculation unit 211, and causes the load calculation unit 211 to start calculating the load.

The completion signal generation unit 231 determines whether or not the current value measured by the current transformer 227 is greater than or equal to the current limit value (FL2I) (step S107). The completion signal generation unit 231 is on standby until the current value reaches the current limit value (FL2I) (step S107: NO).

In the step S107, if it is determined that the current value measured by the current transformer 227 reaches the current limit value (FL2I) (step S107: YES), the completion signal generation unit 231 turns on the operation completion signal, and outputs the signal to the outside (step S108).

The position determination unit 230 determines whether or not the operation start signal is turned off (step S109). The position determination unit 230 is on standby until the operation start signal is turned off (step S109: NO).

In the step S109, if it is determined that the operation start signal is turned off (step S109: YES), the position control unit 221 calculates the speed command in response to the position command for setting the origin as a destination of the movement. The position determination unit 230 causes the switching unit 222 to select the third speed command. The position determination unit 230 causes the switching unit 224 to select the non-restrictive current command (step S110). The position determination unit 230 begins to move the rod 101 toward the origin (in the CCW direction) (step 111).

The position determination unit 230 determines whether or not one end of the rod 101 reaches the speed change position (FL3POS) (step S112). The position determination unit 230 is on standby until one end of the rod 101 reaches the speed change position (FL3POS) (step S112: NO).

In the step S112, if the position determination unit 230 determines that the rod 101 reaches the speed change position (FL3POS) (step S112: YES), the position determination unit 230 causes the switching unit 222 to select the fourth speed command (step S113). At this time, the position determination unit 230 outputs a signal indicating that the rod 101 reaches the position FL3POS to the load calculation unit 211, and terminates the calculation of the load of the load calculation unit 211.

Next, the position determination unit 230 determines whether or not one end of the rod 101 reaches the origin (step S114). The position determination unit 230 is on standby until one end of the rod 101 reaches the origin (step S114: NO).

In the step S114, if the position determination unit 230 determines that one end of the rod 101 reaches the origin (step S114: YES), the position determination unit 230 outputs the signal indicating that one end of the rod 101 reaches the origin to the completion signal generation unit 231. The position determination unit 230 causes the completion signal generation unit 231 to turn off the operation completion signal (step S115), and terminates the process of the control.

Next, a description is given of a process of the motor control unit 20 by associating the speed at which the rod 101 is moved, the current flowing in the linear motor 10, and the position of the rod 101.

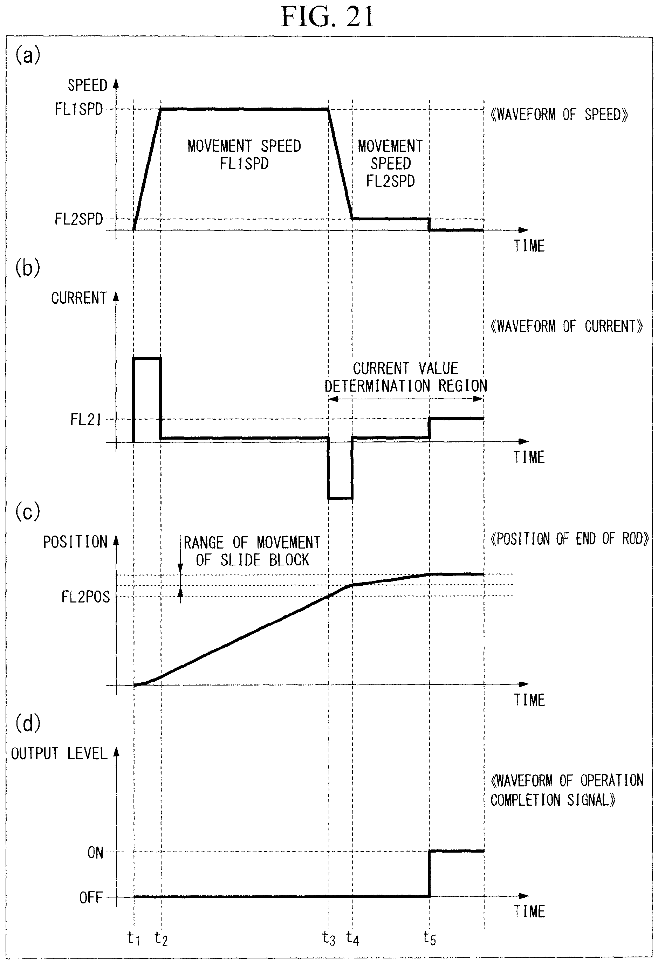

FIG. 21 is a graph illustrating a relationship between the speed, the current, and the position which are drawn until the operation completion signal is turned on after the rod 101 begins to be moved from the origin.

In FIG. 21, each horizontal axis of the graphs (a) to (d) indicates the time. The vertical axis of the graph (a) indicates the speed. The vertical axis of the graph (b) indicates the current value. The vertical axis of the graph (c) indicates the position. The vertical axis of the graph (d) indicates the output level.

The operation start signal is turned on, and returning to the origin is performed (steps S101, S102). Then, at the time t1, the motor control unit 20 performs the process of the step S103, whereby the rod 101 is moved toward the slide block 81 of the linear motion guide device 80 (step S104).

At the time t2, the speed of the rod 101 reaches the first speed (FL1SPD), and the rod is continuously moved.

At the time t3, if one end of the rod 101 reaches the position FL2POS (step S105: YES), the motor control unit 20 performs the process of the step S106, and reduces the speed of the rod 101 down to the second speed (FL2SPD).

At the time t4, one end of the rod 101 comes into contact with the slide block 81, and applies the load to the slide block 81 so as to move the slide block 81 while moving at the second speed (FL2SPD).

At the time t5, when the slide block 81 reaches the end of the range of movement and the rod 101 is stopped, the current flowing in the linear motor 10 increases up to the current limit value (FL21) (step S107: YES). The motor control unit 20 performs the process of the step S108, whereby the operation completion signal is turned on.

Subsequently, a description is given of a process of the motor control unit 20 performed until the rod 101 is returned to the origin.

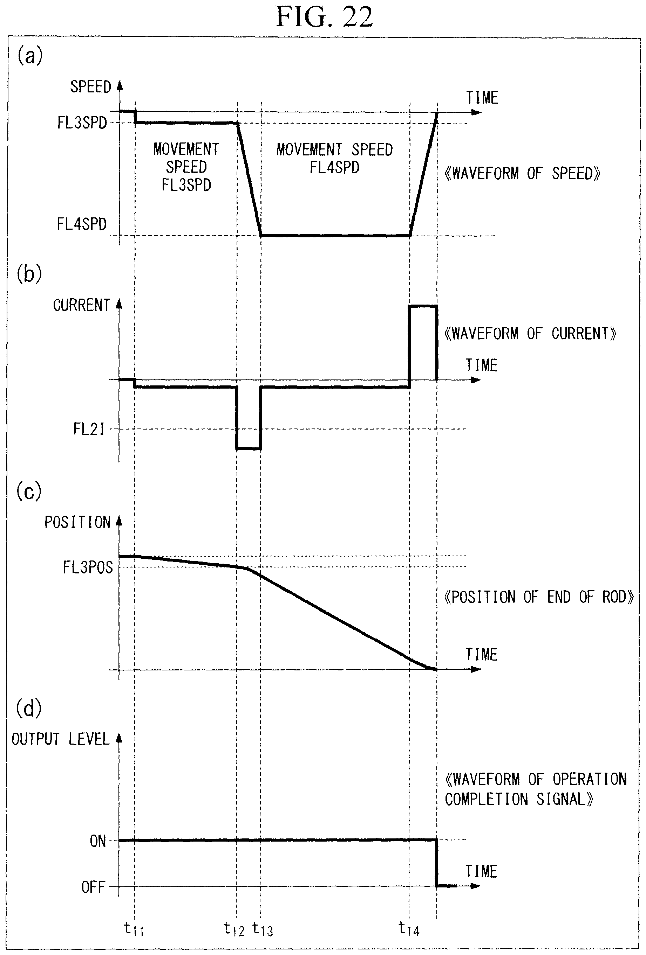

FIG. 22 is a graph illustrating a relationship between the speed, the current, and the position which are drawn until the rod 101 is returned to the origin after the operation completion signal is turned on.

In FIG. 22, each horizontal axis of the graphs (a) to (d) indicates the time. The vertical axis of the graph (a) indicates the speed. The vertical axis of the graph (b) indicates the current value. The vertical axis of the graph (c) indicates the position. The vertical axis of the graph (c) indicates the output level.

At the time t11, an external device (not shown in the drawing) turns off the operation start signal as the operation completion signal is turned on, and sets the position command for setting the origin as a destination of the movement (step S109: YES). The motor control unit 20 performs the process of the step S110, thereby moving the rod 101 at the third speed (FL3SPD) toward the origin (in the CCW direction) (step Sill).

At the time t12, if one end of the rod 101 reaches the speed change position (FL3POS) (step S112: YES), the motor control unit 20 performs the process of the step S113, whereby the position control unit 221 calculates the fourth speed command, and increases the speed of the rod 101 up to the fourth speed (FL4SPD).

At the time t13, the speed at which the rod 101 is moved reaches the fourth speed (FL4SPD).

At the time t14, the motor control unit 20 reduces the speed of the rod 101, stops the rod 101 at the origin at the time t14, and turns off the operation completion signal (step S114, S115).

A control procedure different from a control procedure of the motor control unit 20 shown in FIG. 20 is described.

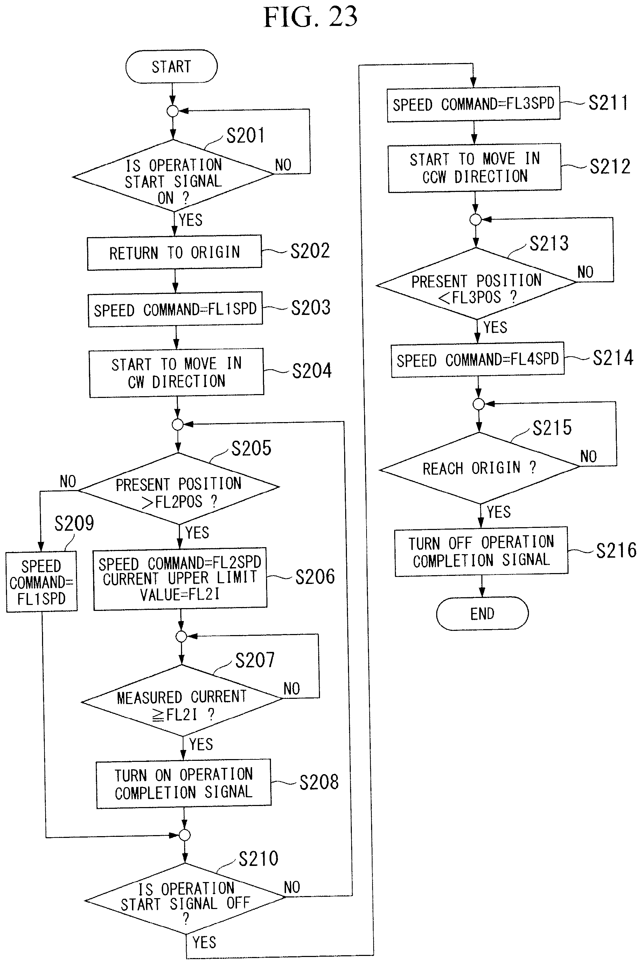

FIG. 23 is a flowchart illustrating the different control procedure of the motor control unit 20 according to the present embodiment. In the control procedure shown in FIG. 23, the processes from step S201 to step S204 are the same as the processes from step S101 to step S104 in the control procedure shown in FIG. 20, and thus the description thereof is omitted.

The position determination unit 230 determines whether or not the rod 101 reaches the position FL2POS (step S205). If the rod 101 reaches the position FL2POS (step S205: YES), the position determination unit 230 causes the switching unit 222 to select the second speed command, and causes the switching unit 224 to select the restrictive current command (step S206). At this time, the position determination unit 230 outputs the signal indicating that the rod 101 reaches the position FL2POS to the load calculation unit 211, and causes the load calculation unit 211 to start the calculation of the load.

The completion signal generation unit 231 determines whether or not the current value measured by the current transformer 227 is greater than or equal to the current limit value (FL2I) (step S207). The completion signal generation unit 231 is on standby until the current value reaches the current limit value (FL2I) (step S207: NO).

In the step S207, if it is determined that the current value measured by the current transformer 227 reaches the current limit value (FL2I) (step S207: YES), the completion signal generation unit 231 turns on the operation completion signal and outputs the signal to the outside (step S208), and the process advances to the step S210.

In the step S205, if the rod 101 does not reach the position FL2POS (step S205: NO), the position determination unit 230 causes the switching unit 222 to continuously select the first speed command, and causes the switching unit 224 to continuously select the non-restrictive current command (step S209), and the process advances to the step S210.

The position determination unit 230 determines whether or not the operation start signal is turned off (step S210).

If the position determination unit 230 determines that the operation start signal is not turned off (step S210: NO), the position determination unit 230 returns the process to the step S205. The position determination unit 230 repeatedly performs the processes from step S205 to step S210.

In contrast, if it is determined that the operation start signal is turned off (step S210: YES), the position control unit 221 calculates the speed command in response to the position command for setting the origin as a destination of the movement. The position determination unit 230 causes the switching unit 222 to select the third speed command, and causes the switching unit 224 to select the non-restrictive current command (step S211). The position control unit 221 moves the rod 101 to the origin (in the CCW direction) (step S212).

The position determination unit 230 determines whether or not one end of the rod 101 reaches the speed change position (FL3POS) (step S213). The position determination unit 230 is on standby until one end of the rod 101 reaches the speed change position (FL3POS) (step S213: NO).

If the position determination unit 230 determines that one end of the rod 101 reaches the speed change position (FL3POS) (step S213: YES), the position determination unit 230 causes the switching unit 222 to select the fourth speed command (step S214). At this time, the position determination unit 230 outputs the signal indicating that the rod 101 reaches the position FL3POS to the load calculation unit 211, and causes the load calculation unit 211 to terminate the calculation of the load.

Next, the position determination unit 230 determines whether or not one end of the rod 101 reaches the origin (step S215). The position determination unit 230 is on standby until one end of the rod 101 reaches the origin (step S215: NO).

If the position determination unit 230 determines that one end of the rod 101 reaches the origin (step S215: YES), the position determination unit 230 outputs the signal indicating that one end of the rod 101 reaches the origin to the completion signal generation unit 231. The completion signal generation unit 231 turns off the operation completion signal (step S216), and terminates the process of the control.

The measurement device 1 according to the present embodiment includes: the rod 101 (a mover) that has the plurality of magnets 103 arranged such that the same poles face each other; and the coil housing case 102 (a stator) that has the plurality of coils 104 surrounding the rod 101.

The measurement device 1 includes the linear motor 10 and the motor control unit 20.

The linear motor 10 relatively moves the coil housing case 102 and the rod 101 in a direction in which the magnets 103 are arranged by the magnetic field of the plurality of magnets 103 and the magnetic field that is generated by flowing current in the plurality of coils 104.

The motor control unit 20 performs control to apply the load to the slide block 81 (the measurement target) by relatively moving the rod 101.

In the motor control unit 20, the current transformer 227 measures the current which flows in the linear motor 10. In the motor control unit 20, the load calculation unit 211 calculates the load (the sliding resistance) applied to the slide block 81 (the measurement target) by the linear motor 10, based on the measured current value.

Thereby, the measurement device 1 is able to measure the load (the sliding resistance) applied to the slide block 81 (the measurement target) while the measurement device 1 is not provided with the measurement instrument such as the load cell.

In the measurement device 1 according to the present embodiment, the motor control unit 20 drives the rod 101 at the first speed (FL1SPD) until bringing the slide block 81 of the linear motion guide device 80 into contact with the rod 101, and thereafter applies the load to the slide block 81 at the second speed (FL2SPD) lower than the first speed (FL1SPD). At this time, the load measurement unit 21 of the motor control unit 20 calculates the load from the current which flows in the linear motor 10, and measures the sliding resistance.

In the measurement device 1, the position control unit 221 outputs a non-contact speed command in the case where the rod 101 and the measurement target are not in contact with each other and the contact speed command in the case where the rod 101 and the measurement target are in contact with each other.

The non-contact speed command includes the first speed command and the fourth speed command. The contact speed command includes the second speed command and the third speed command. The contact speed command is a speed command that indicates a speed lower than that of the non-contact speed command.

The position determination unit 230 selects either one of the non-contact speed command and the contact speed command according to the position of the rod 101, based on whether or not one end of the rod 101 is in a predetermined region, and controls the linear motor 10. The predetermined region is a region which is farther from the origin than the positions FL2POS/FL3POS.

The contact speed command which is issued when the load is applied to the slide block 81 indicates the speeds (the second speed (FL2SPD), the third speed (FL3SPD)) which are lower than the speeds (the first speed (FL1SPD), the fourth speed (FL4SPD)) indicated by the non-contact speed command.

Thereby, the load applied to the slide block 81 is gently changed, and thus it is possible to decrease the change in the current flowing in the linear motor 10. The measurement device 1 can stably measure the load. As a result, by suppressing occurrence of measurement errors, it is possible to improve the measurement accuracy. It is possible to prevent undesired impact from occurring when the rod 101 is brought into contact with the slide block 81.

When the load is applied to the slide block 81, by setting the current value indicated by the current command input to the current control unit 225 to be less than or equal to the current limit value (FL2I), it is possible to detect that the slide block 81 reaches the end of the range of movement. It is possible to prevent the current which flows in the linear motor 10 from rapidly increasing when the rod 101 cannot be moved. Thereby, overcurrent is prevented from flowing in the coils 104 of the linear motor 10, and thus it is possible to prevent the linear motor 10 from deteriorating.

The measurement device 1 moves the rod 101 at a speed higher than the movement speed at which the load is measured, when moving the rod 101 until it comes into contact with the slide block 81. Thus, it is possible to shorten the time for moving the rod 101. The measurement device 1 is able to shorten the time necessary for the measurement.

The measurement device 1 is able to measure the load by being only provided with the linear motor 10 and the motor control unit 20. The measurement device 1 can be formed to have a small size, compared with the case where the measurement instrument is provided. Thus it is possible to suppress the costs of the device.

The measurement device 1 brings the rod 101 of the linear motor 10 (the mover) into contact with the slide block 81 and measures the load. Therefore, it is not necessary that the measurement device 1 is provided with the measurement instrument. In the measurement device 1, there is no loss of the load caused by the measurement instrument, and thus it is possible to measure an exact load.

When returning the rod 101 to the origin, the measurement device 1 switches the third speed (FL3SPD) at which the rod 101 is moved until one end of the rod 101 reaches the speed change position (FL3POS) and the fourth speed (FL4SDP) at which the rod 101 is moved from the speed change position (FL3POS) to the origin.

In a case where the stress is measured when an elastic body recovers its original shape after a load is applied to the elastic body, the rod 101 is moved toward the origin at the third speed (FL3SPD) which is a low speed, and is moved to the origin at the fourth speed (FL4SPD) which is a high speed after the elastic body recovers its original shape. At this time, the speed change position (FL3POS) is set, in advance, as a position at which the rod 101 is separated from the elastic body. The third speed is set as a speed which is lower than the speed at which the elastic body shape is recovered.

Thereby, regarding the stress in the case where the elastic body recovers its original shape, similarly to the case where the elastic body is deformed, the measurement device 1 is able to stably measure the load by reducing errors included in the calculated load. The measurement device 1 moves the rod 101 to the origin at the fourth speed (FL4SPD) higher than the movement speed at which the load is measured, after the elastic body recovers its original shape. Therefore, it is possible to shorten the time for driving the rod 101, and thus it is possible to shorten the time necessary for the measurement.

In a case of sequentially measuring a plurality of measurement targets, the measurement device 1 is able to shorten the time for the measurement. The measurement device 1 is able to shorten the time necessary for measuring the plurality of measurement targets. Therefore, it is possible to reduce the costs of a product test and the like.

In the present embodiment, the load calculation unit 211 stores the calculated load in the load storage unit 212, but the present invention is not limited to this. The calculated load may be associated with the position and the speed of the movement of the rod 101, and may be stored in the load storage unit 212. Thereby, it is possible to measure the load corresponding to the movement speed and position.

The configuration having the bush 108 to guide the linear motion of the rod 101 is described, but the present invention is not limited to this. Instead of the bush 108, a static pressure guide may be provided. Thereby, it is possible to improve the measurement accuracy of the load.

The linear motor 10 that has a small thrust constant at which there is no trouble in moving the measurement target may be used. The reason is that, as the thrust constant of the linear motor 10 decreases, the resolution of measurement of the load improves.

The rod 101 in which magnets having weak magnetic forces may be used, or the number of windings may be reduced by thickening the winding wires used in the coils 104. Thereby, it is possible to improve the measurement accuracy of the load.

The coil housing case 102 may employ a material with a high thermal conductivity. Thereby, an increase in temperature of the coils 104 or the like, which is caused by heat generated when the linear motor 10 is driven, is suppressed. Thereby, it is possible to reduce fluctuation in change of the value of the current flowing in the linear motor 10, and it is possible to improve the measurement accuracy of the load.

The measurement device 1 is able to change the measurement range by changing the thrust constant of the linear motor 10. By providing a plurality of rods 101 with different magnetic forces, the rod 101 used in the measurement is selected according to the measurement target. Thereby, the measurement device 1 is able to set the measurement range appropriate for the measurement target.

The configuration in which the position determination unit 230 controls the load calculation unit 211 such that the load calculation unit 211 starts and terminates the calculation of the load is described, but the present invention is not limited to this. The load calculation unit 211 may constantly calculate the load in the period during which the linear motor 10 is driven.

When the PWM control is used in the power converter 226, an inductor may be provided between the power converter 226 and each coil 104 of the linear motor 10 in series. When the PWM control is used, the waveform of the current flowing in the linear motor 10 includes noise. Therefore, by providing the inductor, the noise included in the current is suppressed. Thus, it is possible to improve the measurement accuracy of the load.

In the present embodiment, regarding the linear motor 10, the configuration using the rod-type linear motor is described, but the present invention is not limited to this. A flat-type linear motor in which the mover having coils is moved relative to the stator having magnets may be used.

In the present embodiment, in the step S107 (FIG. 20), when the current flowing in the coils 104 of the linear motor 10 is greater than the current limit value (FL2I), the configuration in which the processes from the step S108 are performed is described, but the present invention is not limited to this. The processes from the step S108 may be performed in the case where the rod 101 reaches the predetermined position by determining whether or not the rod 101 reaches the predetermined position. Thereby, it is possible to perform the measurement without causing the rod 101 to apply the load greater than a predetermined load.

In the present embodiment, the case where the first speed (FL1SPD) is higher than the second speed (FL2SPD) is described, but the present invention is not limited to this. The first speed (FL1SPD) may be set to be the same as the second speed (FLSPD). The third speed may be set to be the same as the fourth speed.

In the present embodiment, regarding the non-restrictive current command calculated by the speed control unit 223, the current limit value (FL1I) greater than the current limit value (FL2I) may be provided. In this case, a rated current value of the linear motor 10 may be set to be the current limit value (FL1I).

In the present embodiment, a configuration in which the load measurement unit 21 is provided in the motor control unit 20 is described, but the present invention is not limited to this. The linear motor 10, the load measurement unit 21, and the driving unit 22 are independent, and thus the three independent function units may constitute the measurement device 1. The load measurement unit 21 may be configured by using a computer or the like.

A position detection unit according to the present invention corresponds to the position calculation unit 229.

A computer system may be provided inside the motor control unit 20. In this case, the procedure of the processes of the load calculation unit 211, the load storage unit 212, the position control unit 221, the switching units 222 and 224, the speed control unit 223, the current control unit 225, the speed calculation unit 228, the position calculation unit 229, the position determination unit 230, and the completion signal generation unit 231 is stored in a computer-readable recording medium in a program format. Then, a computer reads and executes the program, thereby performing the above-mentioned processes.

The computer-readable recording medium is defined to include a magnetic disk, a magneto optical disk, a CD-ROM, a DVD-ROM, a semiconductor memory, and the like. The above-mentioned computer program may be transferred to the computer through communication lines, and the computer to which the program is transferred may execute the program.

Brief Description of the Reference Symbols

1: measurement device
10: linear motor
101: rod
103: magnet
104: coil
112: magnetic sensor
20: motor control unit
21: load measurement unit
22: driving unit
211: load calculation unit
212: load storage unit
221: position control unit
222: switching uniting unit
223: speed control unit
224: switching uniting unit
225: current control unit
226: power converter
227: current transformer
228: speed calculation unit
229: position calculation unit
230: position determination unit
231: completion signal generation unit

**Claims**

1. A measurement device (1) comprising:

   a linear motor (10);
   a driving unit (22) configured to apply a load to a measurement target (80) by driving the linear motor (10) so as to move a mover (101) provided in the linear motor (10); and
   a load measurement unit (21) configured to calculate the load which is applied by the mover (101) to the measurement target (80), by multiplying a thrust constant of the linear motor (10) by a value of current which flows in the linear motor (10) when the mover (101) is relatively moved,

   **characterized in that**
   when the mover (101) applies the load to the measurement target (80), the driving unit (22) is configured to relatively move the mover (101) at a speed which is lower than a movement speed before the mover (101) applies the load to the measurement target (80).

2. The measurement device according to claim 1, wherein the driving unit (22) further includes:

   a position detection unit (229) configured to detect
   a position of the mover (101);
   a position control unit (221) configured to output a non-contact speed command and a contact speed command, wherein the non-contact speed command is for moving the mover (101) when the mover (101) is not in contact with the measurement target (80), and the contact speed command is for moving the mover (101) when the mover (101) is in contact with the measurement target (80), and configured to indicate a speed lower than that of the non-contact speed command; a position determination unit (230) configured to select either the non-contact speed command or the contact speed command in accordance with the position which is detected by the position detection unit (229);
   a speed control unit (223) configured to generate a current command based on the speed command which is selected by the position determination unit (230); and
   a power converter (226) configured to supply electric power to the linear motor (10) based on the current command which is generated by the speed control unit (223).

3. The measurement device (1) according to claim 2, wherein the speed control unit (223) configured to set an upper limit of the current value indicated by the current command to a predetermined current limit value when the position determination unit selects the contact speed command.

4. The measurement device (1) according to claim 2 or 3,
   wherein the non-contact speed command includes a first speed command indicating a speed at which the mover (101) is moved in a first direction in which the mover (101) approaches the measurement target (80), and
   the contact speed command includes a second speed command indicating a speed at which the mover (101) is moved in the first direction.

5. The measurement device (1) according to any one of claims 2 to 4,
   wherein the contact speed command includes a third speed command indicating a speed at which the mover (101) is moved in a second direction in which the mover moves away from the measurement target (80), and
   the non-contact speed command includes a fourth speed command indicating a speed at which the mover (101) is moved in the second direction.

6. A measurement method comprising:

   a control step of applying a load to a measurement target (80) by driving a linear motor (10) so as to move a mover (101) provided in the linear motor (10); and
   a load measurement step of calculating the load which is applied by the mover (101) to the measurement target (80), by multiplying a thrust constant of the linear motor (10) by a value of current which flows in the linear motor (10) when the mover (101) is relatively moved,

**characterized in that**
wherein in the control step, when the mover (101) applies the load to the measurement target (80), the mover (101) is relatively moved at a speed which is lower than a movement speed before the mover (101) applies the load to the measurement target (80).

**Patentansprüche**

1. Ein Messgerät (1) enthaltend:

    einem Linearmotor (10);
    eine Antriebseinheit (22), die konfiguriert ist eine Last auf ein Messziel (80) aufzubringen, indem sie den Linearmotor (10) so antreibt, dass eine in dem Linearmotor (10) vorgesehene Bewegungsvorrichtung (101) bewegt wird; und
    eine Lastmesseinheit (21), die konfiguriert ist die Last zu berechnen, die von der Bewegungsvorrichtung (101) auf das Messziel (80) aufgebracht wird, indem eine Schubkonstante des Linearmotors (10) mit einem Stromwert multipliziert wird, der in dem Linearmotor (10) fließt, wenn die Bewegungsvorrichtung (101) relativ bewegt wird,

    **dadurch gekennzeichnet, dass**
    wenn die Bewegungsvorrichtung (101) die Last auf das Messziel (80) aufbringt, die Antriebseinheit (22) konfiguriert ist um die Bewegungsvorrichtung (101) relativ zu bewegen mit einer Geschwindigkeit, die geringer ist als eine Bewegungsgeschwindigkeit, bevor die Bewegungsvorrichtung (101) die Last auf das Messziel (80) aufbringt.

2. Das Messgerät nach Anspruch 1,
    wobei die Antriebseinheit (22) ferner umfasst:

    eine Positionserfassungseinheit (229), die konfiguriert ist eine Position der Bewegungsvorrichtung (101) zu erfassen;
    eine Positionssteuereinheit (221), die konfiguriert ist einen Nicht-Kontakt Geschwindigkeitsbefehl und einen Kontaktgeschwindigkeitsbefehl auszugeben,

    wobei der Nicht-Kontakt Geschwindigkeitsbefehl zum Bewegen der Bewegungsvorrichtung (101) dient, wenn die der Bewegungsvorrichtung (101) nicht in Kontakt mit dem Messziel (80) ist, und der Kontaktgeschwindigkeitsbefehl zum Bewegen der

Bewegungsvorrichtung (101) dient, wenn die der Bewegungsvorrichtung (101) in Kontakt mit dem Messziel (80) ist, und
die konfiguriert ist eine Geschwindigkeit anzuzeigen, die niedriger ist als die des Nicht-Kontakt Geschwindigkeitsbefehls;
eine Positionsbestimmungseinheit (230), die konfiguriert ist entweder den Nicht-Kontakt Geschwindigkeitsbefehl oder den Kontaktgeschwindigkeitsbefehl in Übereinstimmung mit der Position auszuwählen, die von der Positionserfassungseinheit (229) erfasst wird;

    eine Geschwindigkeitssteuereinheit (223), die konfiguriert ist einen Strombefehl basierend auf dem Geschwindigkeitsbefehl zu erzeugen, der von der Positionsbestimmungseinheit (230) ausgewählt wird; und
    einen Leistungswandler (226), die konfiguriert ist den Linearmotor (10) auf der Grundlage des Strombefehls, der von der Geschwindigkeitssteuereinheit (223) erzeugt wird, mit elektrischer Energie zu versorgen.

3. Die Messvorrichtung (1) nach Anspruch 2,
    wobei die Geschwindigkeitssteuereinheit (223) konfiguriert ist eine obere Grenze des Stromwertes, der durch den Strombefehl angezeigt wird, auf einen vorbestimmten Stromgrenzwert zu setzten, wenn die Positionsbestimmungseinheit den Kontaktgeschwindigkeitsbefehl auswählt.

4. Die Messvorrichtung (1) nach Anspruch 2 oder 3,
    wobei der Nicht-Kontakt Geschwindigkeitsbefehl einen ersten Geschwindigkeitsbefehl enthält, der eine Geschwindigkeit anzeigt, mit der die Bewegungsvorrichtung (101) in eine erste Richtung bewegt wird, in der sich die Bewegungsvorrichtung (101) dem Messziel (80) nähert, und
    der Kontaktgeschwindigkeitsbefehl einen zweiten Geschwindigkeitsbefehl enthält, der eine Geschwindigkeit angibt, mit der die Bewegungsvorrichtung (101) in die erste Richtung bewegt wird.

5. Die Messvorrichtung (1) nach einem der Ansprüche 2 bis 4,
    wobei der Kontaktgeschwindigkeitsbefehl einen dritten Geschwindigkeitsbefehl enthält, der eine Geschwindigkeit angibt, mit der die Bewegungsvorrichtung (101) in eine zweite Richtung bewegt wird, in der sich die Bewegungsvorrichtung von dem Messziel (80) wegbewegt, und
    der Nicht-Kontakt Geschwindigkeitsbefehl einen vierten Geschwindigkeitsbefehl enthält, der eine Geschwindigkeit angibt, mit der die Bewegungsvorrichtung (101) in die zweite Richtung bewegt wird.

6. Ein Messverfahren, umfassend:

einen Steuerschritt des Aufbringens einer Last auf ein Messziel (80) durch Antreiben eines Linearmotors (10), um eine in dem Linearmotor (10) vorgesehene Bewegungsvorrichtung (101) zu bewegen; und

einen Lastmessschritt zum Berechnen der Last, die durch die Bewegungsvorrichtung (101) auf das Messziel (80) aufgebracht wird, durch Multiplizieren einer Schubkonstante des Linearmotors (10) mit einem Stromwert, der im Linearmotor (10) fließt, wenn die Bewegungsvorrichtung (101) relativ bewegt wird,

**dadurch gekennzeichnet, dass**

wobei in dem Steuerschritt, wenn die Bewegungsvorrichtung (101) die Last auf das Messziel (80) aufbringt, die Bewegungsvorrichtung (101) relativ mit einer Geschwindigkeit bewegt wird, die geringer ist als eine Bewegungsgeschwindigkeit, bevor die Bewegungsvorrichtung (101) die Last auf das Messziel (80) aufbringt.

**Revendications**

1. Dispositif de mesure (1) comprenant :

   un moteur linéaire (10),
   une unité d'entraînement (22) configurée pour appliquer une charge à une cible de mesure (80) en entraînant le moteur linéaire (10) de sorte à déplacer un élément mobile (101) disposé dans le moteur linéaire (10), et
   une unité de mesure de charge (21) configurée pour calculer la charge qui est appliquée par l'élément mobile (101) à la cible de mesure (80) en multipliant une constante de poussée du moteur linéaire (10) par une valeur de courant qui circule dans le moteur linéaire (10) lorsque l'élément mobile (101) est déplacé relativement, **caractérisé en ce que** :
   lorsque l'élément mobile (101) applique la charge à la cible de mesure (80), l'unité d'entraînement (22) est configurée pour déplacer relativement l'élément mobile (101) à une vitesse qui est inférieure à la vitesse de mouvement avant que l'élément mobile (101) applique la charge à la cible de mesure (80).

2. Dispositif de mesure selon la revendication 1, dans lequel l'unité d'entraînement (22) inclut en outre :

   une unité de détection de position (229) configurée pour détecter la position de l'élément mobile (101),
   une unité de commande de position (221) configurée pour délivrer en sortie une instruction de vitesse sans contact et une instruction de vitesse de contact, l'instruction de vitesse sans contact étant destinée à déplacer l'élément mobile (101) lorsque l'élément mobile (101) n'est pas en contact avec la cible de mesure (80), et l'instruction de vitesse de contact étant destinée à déplacer l'élément mobile (101) lorsque l'élément mobile (101) est en contact avec la cible de mesure (80), et configurée pour indiquer une vitesse inférieure à celle de l'instruction de vitesse sans contact,
   une unité de détermination de position (230) configurée pour sélectionner soit l'instruction de vitesse sans contact, soit l'instruction de vitesse de contact en fonction de la position qui est détectée par l'unité de détection de position (229),
   une unité de commande de vitesse (223) configurée pour générer une instruction de courant sur la base de l'instruction de vitesse qui est sélectionnée par l'unité de détermination de position (230), et
   un convertisseur de puissance (226) configuré pour fournir de l'énergie électrique au moteur linéaire (10) sur la base de l'instruction de courant qui est générée par l'unité de commande de vitesse (223).

3. Dispositif de mesure selon la revendication 2, dans lequel l'unité de commande de vitesse (223) est configurée pour régler à une valeur limite de courant prédéterminée la limite supérieure de la valeur de courant indiquée par l'instruction de courant lorsque l'unité de détermination de position sélectionne l'instruction de vitesse de contact.

4. Dispositif de mesure selon la revendication 2 ou la revendication 3, dans lequel l'instruction de vitesse sans contact inclut une première instruction de vitesse indiquant la vitesse à laquelle l'élément mobile (101) est déplacé dans un premier sens dans lequel l'élément mobile (101) se rapproche de la cible de mesure (80), et l'instruction de vitesse de contact inclut une deuxième instruction de vitesse indiquant la vitesse à laquelle l'élément mobile (101) est déplacé dans le premier sens.

5. Dispositif de mesure selon l'une quelconque des revendications 2 à 4, dans lequel l'instruction de vitesse de contact inclut une troisième instruction de vitesse indiquant la vitesse à laquelle l'élément mobile (101) est déplacé dans un second sens dans lequel l'élément mobile se déplace à distance de la cible de mesure (80), et l'instruction de vitesse sans contact inclut une quatrième instruction de vitesse indiquant la vitesse à laquelle l'élément mobile (101) est déplacé dans le second sens.

**6.**   Procédé de mesure comprenant :

une étape de commande consistant à appliquer une charge à une cible de mesure (80) en entraînant un moteur linéaire (10) de sorte à déplacer un élément mobile (101) disposé dans le moteur linéaire (10), et

une étape de mesure de charge consistant à calculer la charge qui est appliquée par l'élément mobile (101) à la cible de mesure (80) en multipliant une constante de poussée du moteur linéaire (10) par une valeur de courant qui circule dans le moteur linéaire (10) lorsque l'élément mobile (101) est déplacé relativement,

**caractérisé en ce que** :

lors de l'étape de commande, lorsque l'élément mobile (101) applique la charge à la cible de mesure (80), l'élément mobile (101) est déplacé relativement à une vitesse qui est inférieure à la vitesse de mouvement avant que l'élément mobile (101) applique la charge à la cible de mesure (80).

# FIG. 1

FIG. 2

# FIG. 3

105a

106

105

104a 104a

104

# FIG. 4

104 104 104

101

103

103

S S N N S S N N S S N N S S N N S S N N S S N N S S N N

U V W U V W U V W U V W U V W U V W U

# FIG. 5

# FIG. 6

# FIG. 7

GND        Vcc

R1        R2

Vout

# FIG. 8

GND

R1

R2

Vout

Vcc

# FIG. 9A

1    4

2    3

# FIG. 9B

Vout+  Vcc

4

1    3

GND    Vout−

2

# FIG. 10

A  B  C  D  E

N | N S | S N | N S | S

$\ell$

$\lambda$

# FIG. 11

VOLTAGE

A    B    C    D    E   POSITION

$\lambda$

MAGNETIC VECTOR

A

B

C

D

E

# FIG. 12A

# FIG. 12B

# FIG. 13

# FIG. 14

# FIG. 15

FIG. 16

FIG. 17

# FIG. 18

EP 2 631 622 B1

# FIG. 19

EP 2 631 622 B1

# FIG. 20

# FIG. 21

(a)

《WAVEFORM OF SPEED》

SPEED
FL1SPD
MOVEMENT SPEED FL1SPD
MOVEMENT SPEED FL2SPD
FL2SPD
TIME

(b)

《WAVEFORM OF CURRENT》

CURRENT
CURRENT VALUE DETERMINATION REGION
FL2I
TIME

(c)

《POSITION OF END OF ROD》

POSITION
RANGE OF MOVEMENT OF SLIDE BLOCK
FL2POS
TIME

(d)

《WAVEFORM OF OPERATION COMPLETION SIGNAL》

OUTPUT LEVEL
ON
OFF
TIME

$t_1$ $t_2$        $t_3$ $t_4$        $t_5$

# FIG. 22

(a)

SPEED ▲

FL3SPD

MOVEMENT
SPEED
FL3SPD

MOVEMENT SPEED
FL4SPD

《WAVEFORM OF SPEED》

TIME

FL4SPD

(b)

CURRENT ▲

《WAVEFORM OF CURRENT》

TIME

FL2I

(c)

POSITION ▲

FL3POS

《POSITION OF END OF ROD》

TIME

(d)

OUTPUT LEVEL ▲

《WAVEFORM OF OPERATION
COMPLETION SIGNAL》

ON

TIME

OFF

$t_{11}$          $t_{12}$ $t_{13}$          $t_{14}$

# FIG. 23

START

S201 IS OPERATION START SIGNAL ON ? — NO

YES

RETURN TO ORIGIN — S202

SPEED COMMAND=FL1SPD — S203

START TO MOVE IN CW DIRECTION — S204

S205 PRESENT POSITION >FL2POS ? — NO

YES

S209 SPEED COMMAND= FL1SPD

SPEED COMMAND=FL2SPD CURRENT UPPER LIMIT VALUE=FL2I — S206

S207 MEASURED CURRENT ≧FL2I ? — NO

YES

TURN ON OPERATION COMPLETION SIGNAL — S208

S210 IS OPERATION START SIGNAL OFF ? — NO

YES

SPEED COMMAND=FL3SPD — S211

START TO MOVE IN CCW DIRECTION — S212

S213 PRESENT POSITION <FL3POS ? — NO

YES

SPEED COMMAND=FL4SPD — S214

S215 REACH ORIGIN ? — NO

YES

TURN OFF OPERATION COMPLETION SIGNAL — S216

END

# FIG. 24

MOTOR CONTROL UNIT — 92

9

91a : MOVER

91 : LINEAR MOTOR

80 : LINEAR MOTION GUIDE DEVICE

82 : TRACK RAIL

81 : SLIDE BLOCK

93 : LOAD CELL

AMPLIFIER — 94

95 : RECORDER

EP 2 631 622 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06124929 B
- JP H1062273 A
- WO 2010024190 A1

**Non-patent literature cited in the description**

- Vertical-Type MR Sensor Technology Data. KOH-DEN Co., Ltd, 01 October 2005